Europäisches Patentamt

European Patent Office

Office européen des brevets

(11) Veröffentlichungsnummer: **0 288 453**
**A1**

## (12) EUROPÄISCHE PATENTANMELDUNG

(21) Anmeldenummer: 88890079.2

(22) Anmeldetag: 28.03.88

(51) Int. Cl.⁴: **F 16 J 12/00**
B 01 J 3/00, B 01 J 3/04

(30) Priorität: 30.03.87 AT 758/87

(43) Veröffentlichungstag der Anmeldung:
26.10.88 Patentblatt 88/43

(84) Benannte Vertragsstaaten:
AT BE CH DE ES FR GB GR IT LI LU NL SE

(71) Anmelder: BOHLER GESELLSCHAFT M.B.H.
Postfach 96
A-8605 Kapfenberg (AT)

(72) Erfinder: Bognar, Josef, Dipl.-Ing.
Peter Tunnergasse 20
A-8605 Kapfenberg (AT)

Moser, Ferdinand
Hermann-Lönsstrasse 26
A-8605 Kapfenberg (AT)

(54) **Höchstdruckbehältnis.**

(57) Einem mehrwandigen Höchstdruckbehältnis ist aus mit Boden (3, 6, 9) und Deckel (4, 7, 10) versehenen Hohlzylindern (2, 5, 8) gebildet, mit zwischen den Behältern herrschenden Drücken, das im Druckbereich von 1,2 GPa anwendbar ist. Hierbei soll eine Verbesserung der Materialausnutzung und Spannungsverteilung erzielt werden, wobei eine Minimierung der Belastungsspanne und des Materialvolumens angestrebt wird. Dies wird dadurch erreicht, daß jeder Hohlzylinder-Boden-Deckel-Teil (A, B, C) ein für sich abgeschlossenes System darstellt, das jeweils schwimmend im nächstfolgend äußeren System angeordnet ist, und die Zwischenräume gestuft druckbeaufschlagt sind.

EP 0 288 453 A1

Bundesdruckerei Berlin

# Beschreibung

## Höchstdruckbehältnis

Die Erfindung betrifft ein Höchstdruckbehältnis, insbesondere mehrwandige, durch Hohlzylindern mit Boden und Deckel versehene Behälter gebildet, mit zwischen den Behältern herrschenden Drücken.

Ein solcher Höchstdruckbehälter dient dazu, in der chemischen und pulververarbeitenden Industrie dann verwendet zu werden, wenn einwandige und damit dickwandige Behälter wegen ungleichmäßiger Spannungsverteilung in der Wand und durch zu großer Spannungen an der Behälterinnenseite nicht mehr verwendet werden können.

Um den Anforderungen einer Druckerhöhung bzw. Sicherheitsreserve zu genügen, sind mehrere konstruktive Lösungen bekannt. Für kleinere Zylinderabmessungen ist das Schrumpfverfahren geeignet. Hierbei wird die ursprünglich einwandige Ausbildund durch zwei übereinander geschobene Zylinder ersetzt, wodurch eine Aufteilung der Belastung zu etwa gleichen Teilen auf Innen- und Außenzylinder erreicht wird. Der ungünstige Spannungsverlauf in jedem Zylinder bleibt jedoch erhalten. Eine Optimierung der Spannungsverhältnisse erfolgt mit zunehmender Anzahl der Zylinder. Nachteilig ist der höhere Fertigungsaufwand der meist eng tolerierten Bauteile. Eine ähnliche Funktion, besonders bei großen Behältern, erfüllen die Wickelverfahren, die das kostenintensive und risikoverbundene Schrumpfen ersetzen. Beide Verfahren scheiden jedoch bei nichtzylindrischen Bauteilen aus. Hier ist die Autofrettage der geeignetste Weg, um optimale Spannungsverhältniss zu erzielen.

Ein weiterer Schritt ist, wie nach der DE-PS 28 29 640 bekannt, einen mehrwandigen Hochdruckbehälter mit einem unter Zwischendruck stehenden Druckübertragungsmittel in jedem Raum zwischen den Wänden zu wählen, um eine möglichst gleichmäßige Spannungsverteilung über der Behälterwand zu erzielen. Da die erforderliche gleichmäßige Spannungsverteilung bei einer Füllung des Zwischenraumes mit festen Stoffen nicht erreicht wird, und bei Verwendung von Flüssigkeit oder Gas die Gefahr besteht, daß bei kleinen Undichtheiten, die z.B. an Dichtungen oder durch Haarrisse der Außenwand auftreten können, der Vordruck abgebaud wird, was zum Bersten des Behälters führen kann, wird eine gießbarer Kunststoff als Druckübertragungsmittel verwendet, der durch mechanische, hydraulische oder pneumatische Mittel unter Druck gesetzt, im festen Zustand sich wie eine Flüssigkeit verhält.

Diese Bauarten haben verschiedene Nachteile gemeinsam. Ein Vollwandbehälter weist eine ungünstige Spannungsverteilung und damit schlechten Materialnutzungsgrad und großes Durchmesserverhältnis auf. Die übrigen Behältertypen haben zwar eine bessere Ausnutzung des Werkstoffes durch negative Vorspannung der inneren Behälterwandung, jedoch die Höhe der Belastungsspanne vom drucklosen zum druckbelasteten Zustand bleibt erhalten. Unter den genannten Belastungsbedingungen sind die Grenzen der derzeit zur Verfügung stehenden Werkstoffe erreicht.

Ausgehend von diesem Stand der Technik lag der Erfindung die Aufgabe zugrunde, ein Höchstdruckbehältnis zu schaffen, das in dem Druckbereich von 1,2 GPa anwendbar ist und darauf abgezielt ist, eine Verbesserung der Materialausnutzung und Spannungsverteilung zu erreichen, wobei eine Minimierung der Belastungsspanne und des Materialvolumens angestrebt wird. Erfindungsgemäß wird das Ziel dadurch erreicht, daß jeder Hohlzylinder-Boden-Deckel-Teil ein für sich abgeschlossenes System darstellt, das jeweils schwimmend im nächstfolgend äußeren System angeordnet ist, und die Zwischenräume gestuft druckbeaufschlagt sind.

Diese besondere Ausbildung hat den Vorteil, daß durch die Ineinanderschachtelung und schwimmende Anordnung der Gefäße, jedes dem Differenzdruck von innen zu außen ausgesetzt ist. Die effektive Belastung wird bei linearer Aufteilung der Druckstufen für jedes Gefäß gleich. Sind z.B. die Abmessungsverhältnisse aller Behälter gleich, ergeben sich auch dieselben Spannungsverhältnisse für jeden Behälter.

Es ist von Vorteil, wenn die Drücke in den Zwischenraumen entsprechend dem Innendruck nach Anzahl der Behälter proportional aufgebracht sind. Die Zwischenräume haben jeweils den gleichen Druck, der als Stütze für den weiteren inneren Behälter dient. Die Anordnung einer Vielzahl von geschlossenen Systemen geringer Wandstärke bieten den Vorteil, daß für höchste Drücke kleine Außenmaße erreichbar sind.

Anhand eines Ausführungsbeispieles sei die Erfindung näher erläutert: Es zeigt

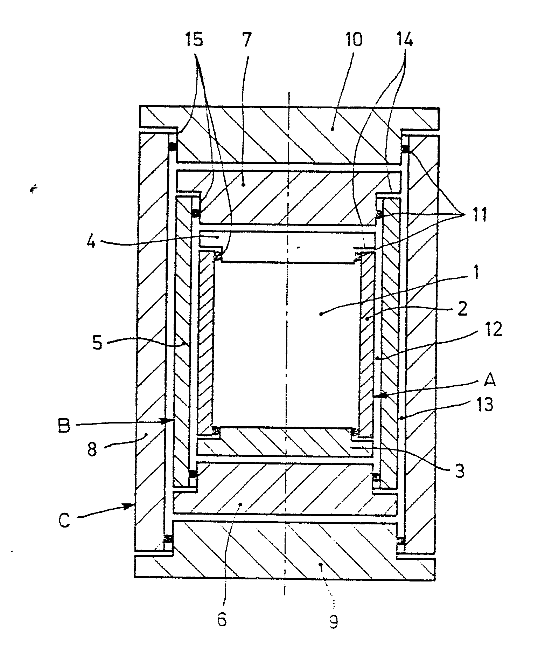

die Figur ein Höchstdruckbehältnis im Schnitt

In der Figur ist schematisch im Schnitt ein Höchstdruckbehältnis dargestellt. Dieses ist zum Beispiel in drei Systeme, A, B, C unterteilt. Das System A ist innen ange ordnet, das für sich allein völlig abgeschlossen ist. Dieses umhüllt den Druckraum 1 und besteht aus dem inneren Hohlzylinder 2. An der Unterseite ist der Boden 3 und an der Oberseite der Deckel 4 mit dem Hohlzylinder 2 dichtend und kraftschlüssig verbunden. Um dieses System A ist nun des weiteren das System B angeordnet, das aus dem Hohlzylinder 5 mit seinem Boden 6 und dem zugehörigen Deckel 7 besteht. Auch diese Teile sind miteinander gut dichtend und kraftschlüssig verbunden. Schließlich ist im Ausführungsbeispiel um diese beiden System A und B noch das äußere System C angeordnet, das wiederum einen Hohlzylinder 8 aufweist, der mit dem Boden 9 und dem Deckel 10 kraftschlüssig verbunden und abgedichtet ist. Die Böden 3, 6, 9 und genauso die Deckel 4, 7, 10 haben je einen Absatz 14, an dessen Innenseite die Dichtflächen 15 liegen. An diesen Dichtflächen 15 einerseits und den inneren Seiten der Hohlzylinder 2, 5, 8 andererseits sind Dichtelemente 11 eingelegt, die aus den Teilen Hohlzylinder und Boden/Deckel ein abgeschlossenes System ergeben. Zwischen dem so erstellten System A und B ist ein innerer Zwischenraum 12 vorgesehen, während zwischen dem System B und C der äußere Zwischenraum 13 gebildet ist.

Wesentlich ist, daß jedes System für sich abgeschlossen ist und schwimmend im nachstfolgenden liegt. Dabei sind die Spannungsverhältnisse bei zueinander proportionalen Behälterabmessungen ähnlich bzw. gleich, während die linear gestuften Differenzdrücke in den Zwischenräumen herrschen. Daraus ergibt sich ein Höchstdruckbehältnis, das den geforderten Ansprüchen in der Größenordnung von 1,2 GPa genügt, ohne daß das Material überbeansprucht ist.

Ferner ist auch wesentlich, daß der Zwischendruck nicht konstant ist, sondern entsprechend dem Innendruck und der Behälterzahl proportional immer wieder neu aufgebracht wird. Die Steuerung bzw. Regelung der einzelnen Druckstufen erfolgt durch eine elektronische Einrichtung.

Mit zunehmender Gefäßanzahl, d.h. bei kleiner werdendem Durchmesserverhältnis, erreicht man den optimalen Spannungsverlauf über die gesamte Behälterwandung.

Mittels Autofrettage kann die Spannungsverteilung innerhalb jeder einzelnen Gefäßwandung noch verbessert werden.

**Patentansprüche**

1. Höchstdruckbehältnis, insbesondere mehrwandige, durch Hohlzylinder mit Boden und Deckel versehene Behälter gebildet, mit zwischen den Behältern herrschenden Drükken, dadurch gekennzeichnet, daß jeder Hohlzylinder-Boden-Deckel-Teil (2-4, 5-7, 8-10) ein für sich abgeschlossenes System (A, B, C) darstellt, das jeweils schwimmend im nächstfolgend äußeren System (B, C) angeordnet ist, und die Zwischenräume (12, 13) gestuft druckbeaufschlagt sind.

2. Höchstdruckbehältnis nach Anspruch 1, dadurch gekennzeichnet, daß die Drücke in den Zwischenräumen (12, 13) entsprechend dem Innendruck (Druckraum 1) nach Anzahl der Behälter proportional aufgebracht sind.

3. Höchstdruckbehältnis nach Anspruch 1 und 2, dadurch gekennzeichnet, daß eine Vielzahl von geschlossenen Systemen geringer Wandstärke verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 075 072 (GÖRGENS) <br> * Ansprüche 1-4,12; Figur 2 * <br> --- | 1-3 | F 16 J 12/00 <br> B 01 J 3/00 <br> B 01 J 3/04 |
| X | FR-A-1 218 206 (BLACKBURN) <br> * Insgesamt * <br> --- | 1-3 | |
| X | US-A-3 647 103 (BERMAN) <br> * Spalte 1, Zeile 64 - Spalte 2, Zeile 56; Figuren * <br> --- | 1-3 | |
| X | FR-A-2 582 071 (TROUILLON) <br> * Ansprüche 1-3; Figuren 1-3 * <br> --- | 1-3 | |
| A | US-A-3 282 459 (WILSON) <br> * Spalte 1, Zeile 44 - Spalte 3, Zeile 23; Figuren * <br> ------ | 1-3 | |

| | | | RECHERCHIERTE SACHGEBIETE (Int. Cl.4) |
|---|---|---|---|
| | | | F 16 J |

Der vorliegende Recherchenbericht wurde für alle Patentansprüche erstellt

| Recherchenort | Abschlußdatum der Recherche | Prüfer |
|---|---|---|
| DEN HAAG | 09-06-1988 | LEGER M.G.M. |